# EUROPÄISCHE PATENTSCHRIFT

(11) **EP 2 524 838 B1**
(45) Veröffentlichungstag und Bekanntmachung des Hinweises auf die Patenterteilung: **03.12.2014**
(21) Anmeldenummer: 12003907.8
(22) Anmeldetag: 18.05.2012
(51) Int. Cl.: B60M 1/26

(54) **Vorrichtung zum Spannen eines Fahrdrahts oder eines Tragseils einer Oberleitungsanlage und Oberleitungsmast**
Device for tensioning a contact wire or a bearer cable of an overhead wire assembly and overhead mast
Dispositif de serrage d'un fil conducteur ou d'un câble de portage d'une installation de caténaires et mât de caténaire

(30) Priorität: 20.05.2011 DE 102011102708
(43) Veröffentlichungstag der Anmeldung: 21.11.2012
(73) Patentinhaber: BICC Holdings GmbH, 81373 München (DE)
(72) Erfinder: Godek, Marcin Edmund, 87671 München (DE)
(74) Vertreter: Oppermann, Frank

(56) Entgegenhaltungen:
- EP-A1- 2 244 153
- DE-B- 2 630 672
- DE-B4-102006 032 816
- DE-C- 519 553
- DE-C1- 19 844 408
- FR-A1- 2 597 040

## Beschreibung

Die Erfindung betrifft eine Vorrichtung zum Spannen eines Fahrdrahts oder eines Tragseils einer Oberleitungsanlage. Darüber hinaus betrifft die Erfindung einen Oberleitungsmast mit einer Vorrichtung zum Spannen des Fahrdrahts oder Tragseils der Oberleitungsanlage.

Für einen ordnungsgemäßen Betrieb der Oberleitungsanlage ist es erforderlich, die Fahrdrähte und Tragseile mit einer bestimmten Zugkraft zu spannen. Zum Abspannen von Tragseilen und Fahrdrähten dienen sogenannte Radspanner, die in regelmäßigen Abständen an den Oberleitungsmasten befestigt sind.

Die bekannten Radspanner verfügen im Allgemeinen über zwei Spanntrommeln zur Aufnahme eines mit dem Fahrdraht oder dem Tragseil verbundenen Kettenabspannseils und eine Spanntrommel zur Aufnahme eines mit einem Nachspanngewicht verbundenen Gewichtsseils. Mit dem Nachspanngewicht wird auf den Fahrdraht oder das Tragseil die erforderliche Zugkraft aufgebracht. Dabei sind die an dem Abspannseil angreifende Kraft und die Gewichtskraft des Nachspanngewichts im Gleichgewicht, wobei Längenänderungen des Fahrdrahts oder Tragseils ausgeglichen werden.

Ein Radspanner ist beispielsweise aus der DE 10 2006 032 816 B4 nach dem Oberbegriff des Anspruchs 1 bekannt. Zur Reduzierung des Gewichts des mit dem Gewichtsseil verbundenen Nachspanngewichts weisen die Spanntrommeln zur Aufnahme des Fahrdrahts oder Tragseils einen kleineren Durchmesser als die Spanntrommel zur Aufnahme des Gewichtsseils auf. Sämtliche Spanntrommeln sind um eine gemeinsame Achse drehbar gelagert. Dabei sind die Spanntrommeln als ein Gussteil starr miteinander verbunden.

Ein Radspanner mit zwei um eine gemeinsame Achse drehbar gelagerten Spanntrommeln unterschiedlichen Durchmessers ist auch aus der DE 199 32 195 C1 bekannt.
Die oben beschriebenen Radspanner haben sich in der Praxis bewährt. Nachteilig ist jedoch, dass die Radspanner aufgrund des verhältnismäßig großen Durchmessers einer der beiden Spanntrommeln einen großen Bauraum beanspruchen. Daher ist es nicht möglich, die bekannten Radspanner in die relativ schlanken Oberleitungsmasten zu integrieren. Insofern bestimmen die bekannten Radspanner das äußere Erscheinungsbild der Oberleitungsmasten.

Der Erfindung liegt die Aufgabe zugrunde, eine Vorrichtung zum Spannen eines Fahrdrahts oder eines Tragseils einer Oberleitungsanlage zu schaffen, die einen kompakten Aufbau hat. Darüber hinaus ist eine Aufgabe der Erfindung, einen Oberleitungsmast zu schaffen, dessen äußeres Erscheinungsbild durch den Radspanner nur unwesentlich beeinflusst wird.

Die Lösung dieser Aufgaben erfolgt erfindungsgemäß mit den Merkmalen der Patentansprüche 1 und 14. Die Unteransprüche betreffen vorteilhafte Ausführungsformen der Erfindung.

Die erfindungsgemäße Vorrichtung zum Spannen eines Fahrdrahts oder eines Tragseils zeichnet sich dadurch aus, dass zur Reduzierung des Gewichts des mit dem Gewichtsseil verbundenen Nachspanngewichts die erste Spanntrommel und die zweite Spanntrommel mit einem Getriebe verbunden sind, wobei die Achsen der ersten und zweiten Spanntrommel im Abstand zueinander angeordnet sind. Aufgrund des Getriebes, mit dem das erforderliche Übersetzungsverhältnis vorgegeben wird, ist es also nicht erforderlich, eine der beiden Spanntrommeln mit einem verhältnismäßig großen Durchmesser auszubilden. Dadurch ergibt sich eine kompakte Bauform, die eine Integration der Vorrichtung zum Spannen des Fahrdrahts oder des Tragseils in den Mastkopf eines Oberleitungsmasts erlaubt.

Bei einer bevorzugten Ausführungsform haben die erste Spanntrommel und die zweite Spanntrommel den gleichen Durchmesser. Die Durchmesser der beiden Spanntrommeln können sich aber auch voneinander unterscheiden. Entscheidend ist nur, dass die Durchmesser beider Spanntrommeln in einem Bereich liegen, der den Einbau der Vorrichtung zum Spannen des Fahrdrahts oder Tragseils in den Mastkopf eines Oberleitungsmasts erlaubt.

Das Getriebe kann unterschiedlich ausgebildet sein. Entscheidend ist nur, dass das Getriebe kleine Abmessungen hat. Auch sollte das Getriebe kostengünstig herstellbar sein und wartungsfrei arbeiten. Bei einer bevorzugten Ausführungsform ist das Getriebe ein Zugmittelgetriebe, vorzugsweise ein Kettengetriebe.

Das Kettengetriebe kann ein Paar von Ritzeln aufweisen, die von einer Kette umschlungen werden, wobei das Paar von Ritzeln einander gegenüberliegend auf einer Seite der ersten und zweiten Spanntrommel angeordnet ist. Es ist aber auch möglich, dass das Kettengetriebe zwei Paare von Ritzeln aufweist, die jeweils von einer Kette umschlungen werden, wobei das eine Paar von Ritzeln einander gegenüberliegend auf der einen Seite und das andere Paar von Ritzeln einander gegenüberliegend auf der anderen Seite der ersten und zweiten Spanntrommeln angeordnet sind. Dadurch wird ein symmetrischer Aufbau erzielt, durch den die wirksamen Kräfte von beiden Seiten gleichmäßiger eingeleitet werden.

Eine weitere bevorzugte Ausführungsform sieht vor, dass die erste und zweite Spanntrommel an einem Rahmen drehbar gelagert sind, der vorzugsweise zwei einander gegenüberliegende Platten aufweist, zwischen denen die erste und zweite Spanntrommel angeordnet sind. Dieser Rahmen nimmt vorzugsweise auch das Zugmittelgetriebe, insbesondere Kettengetriebe auf.

Bei einem Riss des Fahrdrahts oder Tragseils entfällt die das Nachspanngewicht haltende Zugkraft des Abspannseils. Unter dem Einfluss der Schwerkraft fällt das Nachspanngewicht somit nach unten, wodurch Beschädigungen an der Oberleitung auftreten können. Eine besondere Ausfiihrungsform der Erfindung sieht daher eine Sperreinrichtung vor, die weitere Schäden an der Oberleitung verhindern soll. Der Rahmen mit der ersten und zweiten Spanntrommel ist um eine zu den Drehachsen der ersten und zweiten Spanntrommel parallel verlaufende Schwenkachse schwenkbar gelagert, so dass der Rahmen aus einer ersten Position in eine zweite Position schwenkbar ist. Unter der Zugkraft des Nachspannseils befindet sich der Rahmen in der ersten Position. Die Sperreinrichtung ist derart ausgebildet, dass in der ersten Position des Rahmens die erste und zweite Spanntrommel frei drehbar sind. Wenn die Zugkraft des Abspannseils aufgrund eines Risses des Fahrdrahts oder Tragseils entfällt, schwenkt der Rahmen in die zweite Position, in der die Sperreinrichtung die erste und/oder zweite Spanntrommel arretiert. Es ist ausreichend, dass nur eine der beiden Spanntrommeln arretiert wird, da beide Spanntrommeln mit dem Getriebe verbunden sind.

Eine weitere besonders bevorzugte Ausführungsform sieht vor, dass die Sperreinrichtung mindestens ein Rastelement aufweist, das derart angeordnet ist, dass das Rastelement in der zweiten Position des Rahmens in eine Rastverzahnung der zweiten Spanntrommel greift. Die Rastverzahnung kann aber auch an der ersten Spanntrommel vorgesehen sein. Auch ist es möglich, dass die Rastverzahnung an einem anderen Bauteil vorgesehen ist, das mit einer der beiden Spanntrommeln verbunden ist.

Eine alternative besonders bevorzugte Ausführungsform sieht zwei nebeneinander angeordnete Rastelemente vor, die derart angeordnet sind, dass die Rastelemente in der zweiten Position des Rahmens jeweils in eine Rastverzahnung der zweiten Spanntrommel greifen. Dadurch wird wieder ein symmetrischer Aufbau erzielt, wodurch die Kräfte wieder gleichmäßig eingeleitet werden.

Aufgrund des kompakten Aufbaus kann die Spanneinrichtung in einem Gehäuse angeordnet werden, das vorzugsweise zwei Seitenplatten und eine Deckplatte und eine Bodenplatte aufweist. Das Gehäuse braucht dabei nicht vollständig geschlossen zu sein.

Im Folgenden wird ein Ausführungsbeispiel der Erfindung unter Bezugnahme auf die Zeichnungen näher erläutert.

Es zeigen:
- Fig. 1: die Vorrichtung zum Spannen eines Fahrdrahts oder eines Tragseils in perspektivischer Darstellung,
- Fig. 2: die Vorrichtung von Fig. 1, wobei eine der Seitenplatten des Gehäuses abgenommen ist,

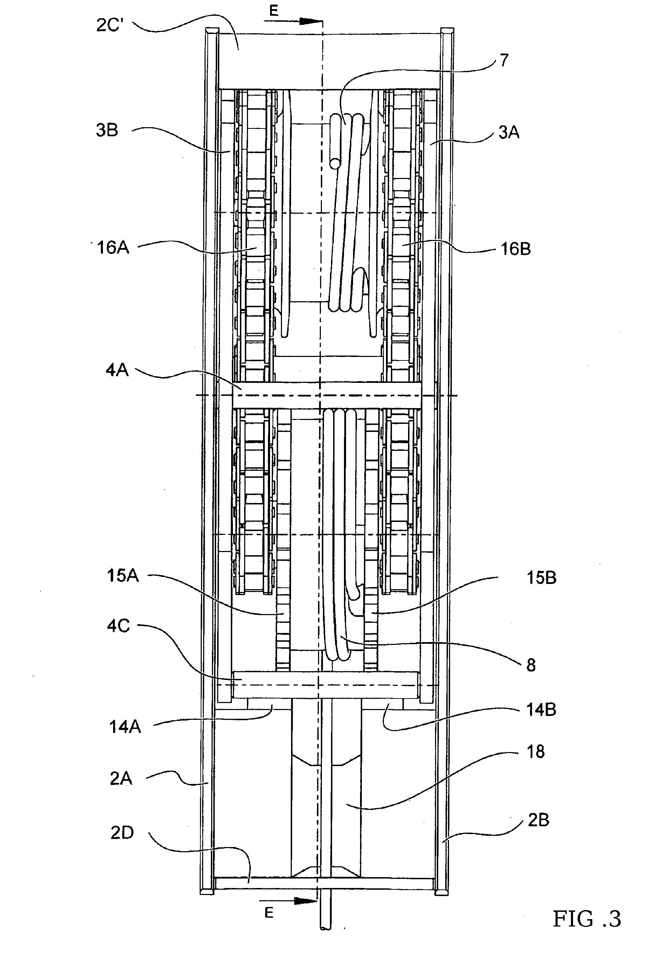

- Fig. 3: eine Seitenansicht der Vorrichtung von Fig. 1,
- Fig. 4: einen Schnitt entlang der Linie E-E von Fig. 3, wobei sich der Rahmen mit den Spanntrommeln in der ersten Position befindet, in der die Spanntrommeln frei drehbar sind,
- Fig. 5: einen Schnitt durch die Vorrichtung von Fig. 3 entlang der Linie E-E, wobei sich der Rahmen mit den Spanntrommeln in der zweiten Position befindet, in der die Spanntrommeln arretiert sind und
- Fig. 6: einen Mast mit der Vorrichtung zum Spannen des Fahrdrahts oder Tragseils in teilweise geschnittener perspektivischer Darstellung.

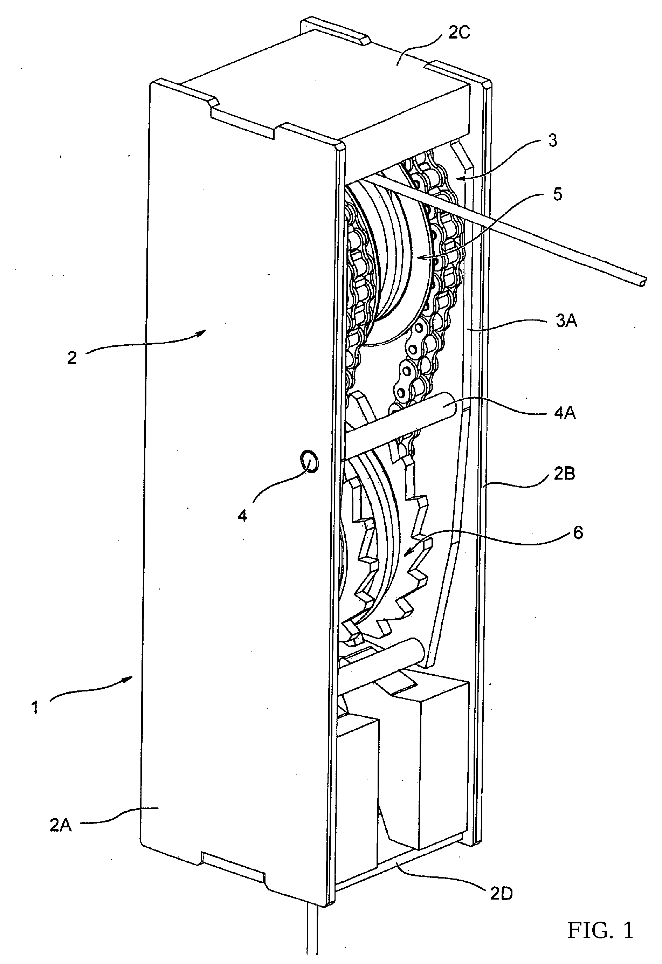

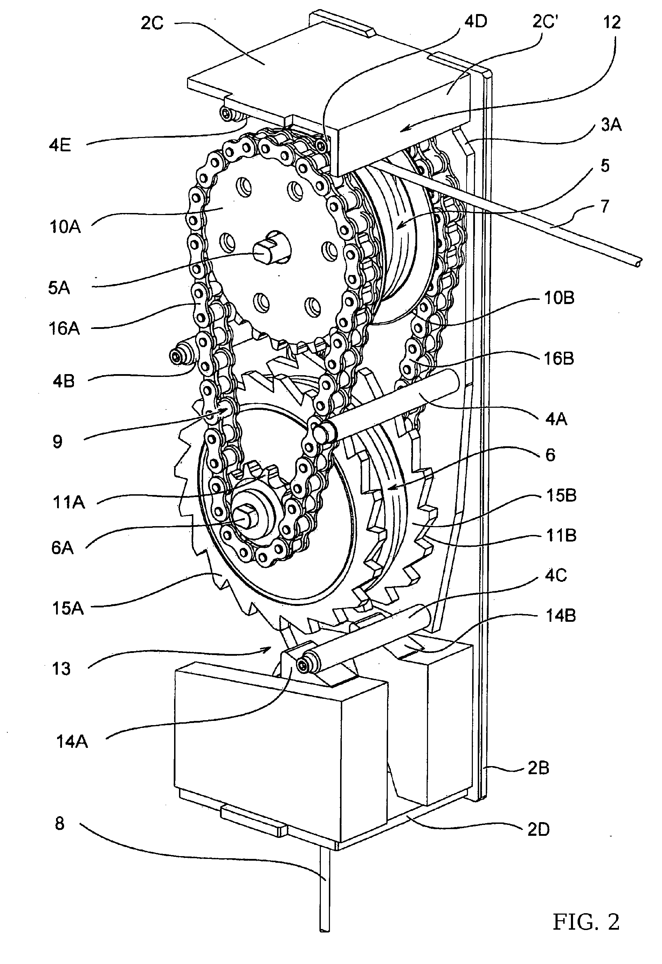

Fig. 1 zeigt die Vorrichtung zum Spannen eines Fahrdrahts oder Tragseils in der Seitenansicht, während Fig. 2 die Vorrichtung bei abgenommener Seitenplatte des Gehäuses zeigt. In den Fig. 1 und 2 ist die Vorrichtung in der Lage dargestellt, in der die Vorrichtung in den Mastkopf eines Oberleitungsmasts eingebaut wird.

Die Vorrichtung 1 zum Spannen eines Fahrdrahts oder Tragseils weist ein Gehäuse 2 auf, das zwei Seitenplatten 2A, 2B sowie eine Deckplatte 2C und eine Bodenplatte 2D hat. An den Schmalseiten ist das Gehäuse 2 offen.

In dem Gehäuse 2 ist ein Rahmen 3 schwenkbar gelagert. Der Rahmen 3 weist zwei parallele Seitenplatten 3A, 3B auf, die mittels Stangen 4A, 4B, 4C, 4D, 4E im Abstand zueinander miteinander verbunden sind. Die Stange 4A, die in den Fig. 1 und 2 auf der rechten Seite des Rahmens 3 angeordnet ist, nimmt eine Achse 4 auf, die sich zu beiden Seiten durch die Seitenplatten 3A, 3B des Rahmens 3 und der Seitenwände 2A, 2B des Gehäuses 2 erstreckt. Diese Achse 4 bildet die Schwenkachse, um die der Rahmen 3 in dem Gehäuse 2 schwenkbar ist.

Der Rahmen 3 kann in dem Gehäuse 2 aus einer ersten Position in eine zweite Position gekippt werden. In den Fig. 1 und 2 befindet sich der Rahmen 3 in der ersten Position. Dieser Schwenkmechanismus wird nachfolgend noch im Einzelnen beschrieben.

In dem Rahmen 3 ist eine erste obere Spanntrommel 5 um eine Achse 5A und eine zweite untere Spanntrommel 6 um eine Achse 6A drehbar gelagert, wobei die Achsen übereinander angeordnet sind.

Die erste Spanntrommel 5 dient zur Aufnahme eines mit dem nicht dargestellten Fahrdraht oder Tragseil verbundenen Abspannseils 7. Das auf die erste Spanntrommel 5 aufgewickelte Abspannseil 7 erstreckt sich in horizontaler Richtung nach rechts. Die zweite Spanntrommel 6 dient zur Aufnahme eines mit einem Nachspanngewicht verbundenen Gewichtsseils 8. Das auf die untere Spanntrommel aufgewickelte Gewichtsseil 8 erstreckt sich in vertikaler Richtung nach unten.

Die erste und zweite Spanntrommel 5, 6 haben bei dem vorliegenden Ausführungsbeispiel den gleichen Durchmesser. Dabei wird unter dem Durchmesser der Spanntrommeln der Durchmesser des Teils der Spanntrommeln verstanden, auf dem das Abspannseil 7 bzw. das Gewichtsseils 8 aufgewickelt ist. Die Spanntrommeln können grundsätzlich aber auch unterschiedliche Durchmesser haben. Aufgrund der angestrebten kompakten Bauweise sollte aber eine der beiden Spanntrommeln nicht einen wesentlich größeren Durchmesser haben.

Die erste und zweite Spanntrommel 5, 6 sind mit einem Zugmittelgetriebe miteinander verbunden, das bei dem vorliegenden Ausführungsbeispiel einen Übersetzungsverhältnis von 1:3 hat. Das Zugmittelgetriebe kann aber auch ein anderes Übersetzungsverhältnis, bspw. 1:5 haben.

Bei dem vorliegenden Ausfiihrungsbeispiel ist das Zugmittelgetriebe ein Kettengetriebe 9. Das Kettengetriebe 9 weist ein erstes Paar von Ritzeln 10A, 11 A auf, die auf einer Seite der Spanntrommeln 5, 6 angeordnet sind, und ein zweites Paar von Ritzeln 10B, 11B auf, das auf der anderen Seite der Spanntrommeln 5, 6 angeordnet ist. Die Ritzel 10A, 11 A; 10B, 11B des Kettengetriebes 9 sitzen auf den Achsen 5A, 6A der Spanntrommeln 5, 6, so dass die Ritzel mit den Spanntrommeln verbunden sind. Das erste und zweite Paar von Ritzeln 10A, 10B; 11A, 11B werden jeweils von einer Kette 16A, 16B umschlungen.

Die beiden Ritzel 10A, 10B der ersten oberen Spanntrommel 5 haben einen größeren Durchmesser als die beiden Ritzel 11 A, 11 B der zweiten unteren Spanntrommel 6. Der Durchmesser ist entsprechend dem Übersetzungsverhältnis von 1:3, wenn die Spanntrommeln 5, 6 den gleichen Durchmesser haben. Ansonsten sind die Durchmesser der Ritzel entsprechend zu bemessen.

Bei der Vorrichtung zum Spannen des Fahrdrahts oder Tragseils, die auch als Radspanner bezeichnet wird, ist die an dem Abspannseil 7 angreifende Zugkraft des Fahrdrahts oder Tragseils im Gleichgewicht mit der Gewichtskraft des Nachspanngewichts. Dabei werden Längenänderungen des Fahrdrahts oder Tragseils ausgeglichen. Die an dem Abspannseil 7 wirkende Kraft hält den Rahmen 3 in der ersten Position, wobei der Rahmen 3 an der Deckplatte 2C des Gehäuses 2 anschlägt. Den Anschlag 12 bildet ein nach unten vorspringender Teil 2C' des Deckelteils, an dem die oberen Kanten der Seitenplatten 3A, 3B des Rahmens 3 in der ersten Position anliegen.

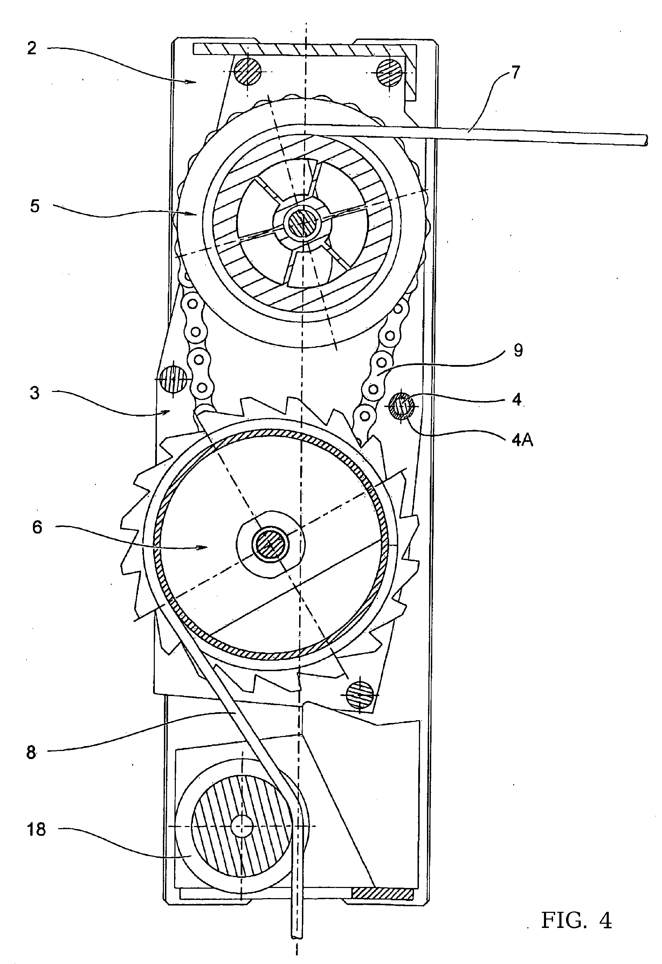

Bei einem Riss des Fahrdrahts oder Tragseils oder auch des Abspannseils 7 entfällt die an der ersten Spanntrommel 5 angreifende Zugkraft, die den Rahmen 3 gegen den Anschlag 12 zieht. Fig. 4 zeigt eine Seitenansicht des Radspanners in teilweise geschnittener Darstellung, wobei sich der Rahmen in der ersten Position befindet.

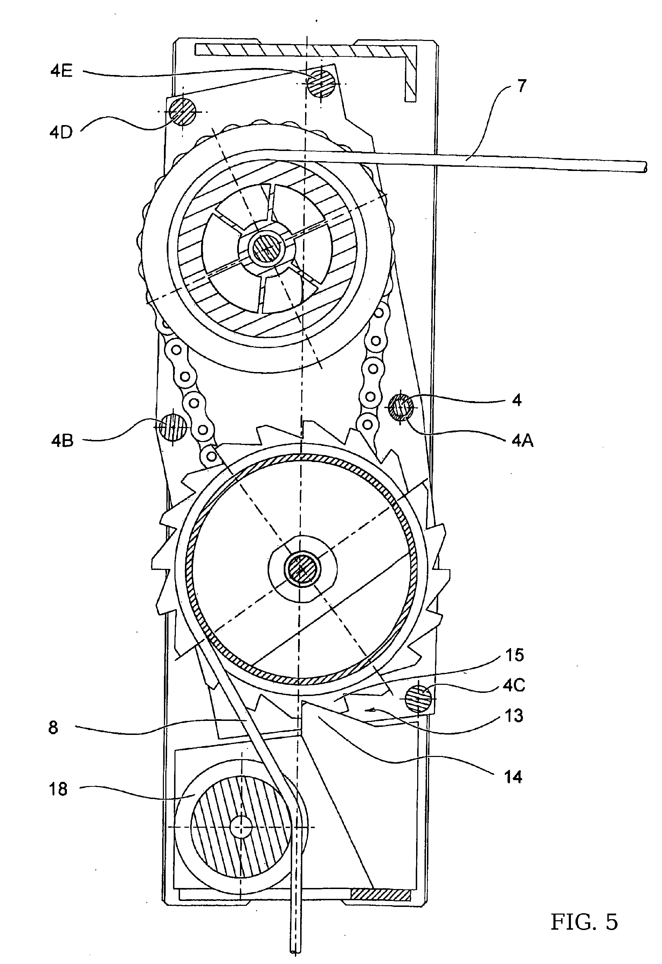

Mit dem Entfall der an dem Abspannseil 7 ziehenden Zugkraft verschwenkt der Rahmen aufgrund seiner Gewichtskraft um die Schwenkachse 4. Der Rahmen kippt aus der in Fig. 4 dargestellten ersten Position in die in Fig. 5 dargestellte zweite Position. Während die Spanntrommeln 5, 6 in der ersten Position (Fig. 4) frei beweglich sind, sind die Spanntrommeln in der zweiten Position (Fig. 5) nach dem Riss des Fahrdrahts oder Tragseils gesperrt. Dadurch wird vermieden, dass das Nachspanngewicht mit dem Riss des Fahrdrahts oder Tragseils plötzlich nach unten fällt, so dass weitere Schäden an der Oberleitung vermieden werden.

Zur Arretierung der Spanntrommeln 5, 6 in der zweiten Sperrposition dient eine Sperreinrichtung 13. Bei dem vorliegenden Ausfiihrungsbeispiel weist die Sperreinrichtung 13 zwei Rastelemente 14A, 14B auf, die unterhalb der zweiten Spanntrommel 6 nebeneinander angeordnet sind. Darüber hinaus umfasst die Sperreinrichtung 13 den Rastelementen 14A, 14B zugeordnete Rastverzahnungen 15A, 15B, die den Rastelementen gegenüberliegend an den beiden Seiten der zweiten Spanntrommel 6 angeordnet sind. Wenn der Rahmen 3 aus der ersten in die zweite Position kippt, greifen die Rastelemente 14A, 14B in die Rastverzahnungen 15A, 15B der zweiten Spanntrommel 6, so dass die zweite Spanntrommel arretiert ist. Damit ist auch die erste Spanntrommel arretiert, da beide Spanntrommeln über das Kettengetriebe miteinander verbunden sind. In den Figuren ist die Sperreinrichtung nur schematisch dargestellt. Die Rastelemente können federnd gegen die Zähne der Rastverzahnung vorgespannt sein.

Zur Führung des Gewichtsseils 8 ist unterhalb der zweiten Spanntrommel 6 eine Führungsrolle 18 drehbar gelagert, die von dem Gewichtsseil 8 teilweise umschlungen wird.

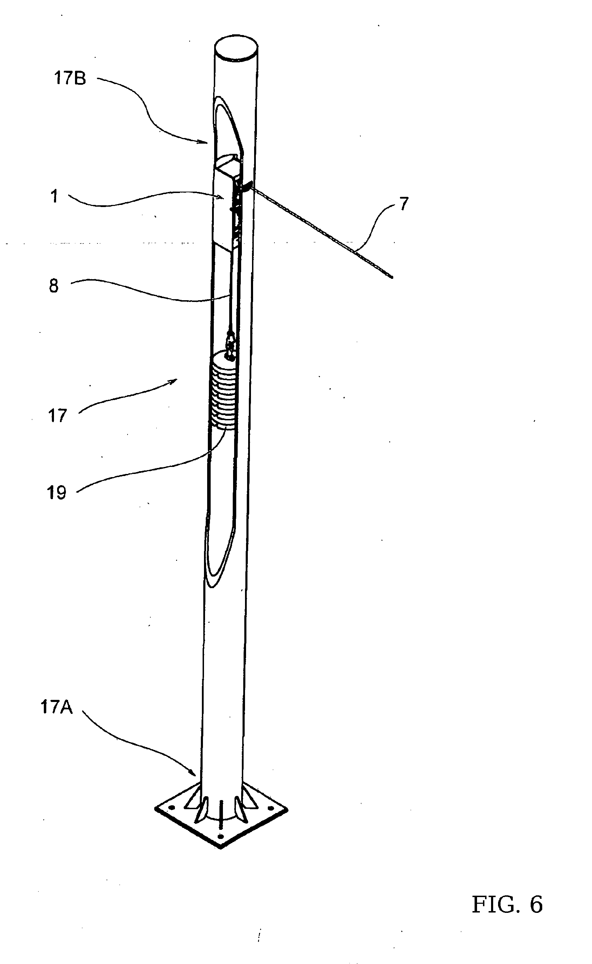

Fig. 6 zeigt einen Oberleitungsmast in der Seitenansicht. Der Oberleitungsmast 17 ist ein Metallmast, der einen Mastfuß 17A und einen Mastkopf 17B aufweist. Der Radspanner 1 ist in den Mastkopf 17B des Oberleitungsmasts 17eingebaut. Da der Radspanner 1 einen kompakten Aufbau hat, kann der Radspanner vollständig in den Mastkopf integriert werden, ohne dass Teile des Radspanners seitlich überstehen. Dadurch wird das äußere Erscheinungsbild des Oberleitungsmasts nicht beeinträchtigt. In Fig. 6 sind auch das innerhalb des Masts verlaufende Gewichtsseil mit dem Nachspanngewicht 19 zu erkennen.

## Patentansprüche

1. Vorrichtung zum Spannen eines Fahrdrahts oder eines Tragseils einer Oberleitungsanlage mit
einer Spanneinrichtung, die eine erste Spanntrommel (5) zur Aufnahme eines mit dem Fahrdraht oder dem Tragseil verbundenen Abspannseils und eine zweite Spanntrommel (6) zur Aufnahme eines mit einem Nachspanngewicht verbundenen Gewichtseils aufweist,
**dadurch gekennzeichnet, dass**
das die erste Spanntrommel (5) und zweite Spanntrommel (6) zur Redzuzierung des Gewichts des Nachspanngewichts mit einem Getriebe (9) verbunden sind, wobei die Achsen (5A, 6A) der ersten und zweiten Spanntrommel im Abstand zueinander angeordnet sind.

2. Vorrichtung nach Anspruch 1, **dadurch gekennzeichnet, dass** die erste Spanntrommel (5) und die zweite Spanntrommel (6) den gleichen Durchmesser haben.

3. Vorrichtung nach Anspruch 1 oder 2, **dadurch gekennzeichnet, dass** das Getriebe eine Zugmittelgetriebe (9) ist.

4. Vorrichtung nach Anspruch 3, **dadurch gekennzeichnet, dass** das Zugmittelgetriebe ein Kettengetriebe (9) ist, das ein Paar (10A, 11 A) von Ritzelen aufweist, die von einer Kette (16A) umschlungen werden, wobei das Paar (10A, 11 A) von Ritzeln einander gegenüberliegend auf einer Seite der ersten und zweiten Spanntrommel (5, 6) angeordnet ist.

5. Vorrichtung nach Anspruch 3, **dadurch gekennzeichnet, dass** das Zugmittelgetriebe ein Kettengetriebe (9) ist, das zwei Paare (10A, 11A; 10B, 11B) von Ritzelen aufweist, die jeweils von einer Kette (16A, 16B) umschlungen werden, wobei das eine Paar (10A, 11A) von Ritzeln einander gegenüberliegend auf der einen Seite und das andere Paar (10B, 11B) von Ritzeln einander gegenüberliegend auf der anderen Seite der ersten und zweiten Spanntrommel (5, 6) angeordnet ist.

6. Vorrichtung nach einem der Ansprüche 1 bis 5, **dadurch gekennzeichnet, dass** die erste und zweite Spanntrommel (5, 6) an einem Rahmen (3) drehbar gelagert sind.

7. Vorrichtung nach Anspruch 6, **dadurch gekennzeichnet, dass** der Rahmen (3) zwei einander gegenüberliegende Platten (3A, 3B) aufweist, zwischen denen die erste und zweite Spanntrommel (5, 6) angeordnet sind.

8. Vorrichtung nach Anspruch 5 oder 6, **dadurch gekennzeichnet, dass** der Rahmen (3) um eine zu den Drehachsen (5A, 6A) der ersten und zweiten Spanntrommel (5, 6) parallel verlaufende Schwenkachse (4) schwenkbar gelagert ist, so dass der Rahmen (3) aus einer ersten Position in eine zweite Position schwenkbar ist.

9. Vorrichtung nach einem der Ansprüche 1 bis 8, **dadurch gekennzeichnet, dass** die Spanneinrichtung eine Sperreinrichtung (13) aufweist, die derart ausgebildet ist, dass in der ersten Position des Rahmens (3) die erste und/oder zweite Spanntrommel (5, 6) frei drehbar und in der zweiten Position des Rahmens (3) die erste und/oder zweite Spanntrommel (5, 6) arretiert ist.

10. Vorrichtung nach Anspruch 9, **dadurch gekennzeichnet, dass** die Sperreinrichtung (13) mindestens ein Rastelement (14A, 14B) aufweist, dass derart angeordnet ist, dass das Rastelement (14A, 14B) in der zweiten Position des Rahmens (3) in eine Rastverzahnung (15A, 15B) der zweiten Spanntrommel (6) greift.

11. Vorrichtung nach Anspruch 9, **dadurch gekennzeichnet, dass** die Sperreinrichtung zwei neben einander angeordnete Rastelemente (14A, 14B) aufweist, die derart angeordnet sind, dass die Rastelemente (14A, 14B) in der zweiten Position des Rahmens (3) jeweils in eine Rastverzahnung (15A, 15B) der zweiten Spanntrommel (6) greifen.

12. Vorrichtung nach einem der Ansprüche 1 bis 11, **dadurch gekennzeichnet, dass** die Spanneinrichtung in einem Gehäuse (2) angeordnet ist.

13. Vorrichtung nach Anspruch 12, **dadurch gekennzeichnet, dass** das Gehäuse (2) zwei Seitenplatten (2A, 2B) und eine Deckplatte (2C) und eine Bodenplatte (2D) aufweist.

14. Oberleitungsmast mit einer Vorrichtung zum Spannen eines Fahrdrahtes oder eines Tragseils nach einem der Ansprüche 1 bis 13.

15. Oberleitungsmast nach Anspruch 14, **dadurch gekennzeichnet, dass** die Vorrichtung zum Spannen eines Fahrdrahtes oder eines Tragseils innerhalb des Mastkopfes (17A) des Oberleitungsmasts (17) angeordnet ist.

## Claims

1. Device for tensioning a contact wire or a bearer cable of an overhead conductor system, comprising a tensioning device having a first tension drum (5) for taking up a stay cable connected to the contact wire or the bearer cable, and a second tension drum (6) for taking up a weight cable connected to a balance weight, **characterised in that** the first tension drum (5) and the second tension drum (6) are connected to a transmission mechanism (9) for reducing the weight of the balance weight, the axles (5A, 6A) of the first and second tension drums being arranged at a distance from each other.

2. Device according to claim 1, **characterised in that** the first tension drum (5) and the second tension drum (6) have the same diameter.

3. Device according to either claim 1 or claim 2, **characterised in that** the transmission mechanism is a traction drive (9).

4. Device according to claim 3, **characterised in that** the traction drive is a chain drive (9) comprising a pair (10A, 11A) of pinions surrounded by a chain (16A), the pair (10A, 11A) of pinions being arranged mutually opposed to one another on one side of the first and second tension drums (5, 6).

5. Device according to claim 3, **characterised in that** the traction drive is a chain drive (9) comprising two pairs (10A, 11A; 10B, 11 B) of pinions, each pair surrounded by a chain (16A, 16B), one pair (10A, 11A) of pinions being arranged mutually opposed to one another on one side and the other pair (10B, 11B) of pinions being arranged mutually opposed to one another on the other side of the first and second tension drums (5, 6).

6. Device according to any of claims 1 to 5, **characterised in that** the first and second tension drums (5, 6) are rotatably mounted on a frame (3).

7. Device according to claim 6, **characterised in that** the frame (3) comprises two mutually opposing plates (3A, 3B), between which plates the first and second tension drums (5, 6) are arranged.

8. Device according to either claim 5 or claim 6, **characterised in that** the frame (3) is pivotally mounted about a swivel axis (4) extending parallel to the axes of rotation (5A, 6A) of the first and second tension drums (5, 6) such that the frame (3) can be pivoted from a first position into a second position.

9. Device according to any of claims 1 to 8, **characterised in that** the tensioning device comprises a blocking device (13) configured such that, in the first position of the frame (3) the first and/or second tension drum (5, 6) is freely rotatable and in the second position of the frame (3) the first and/or second tension drum (5, 6) is locked.

10. Device according to claim 9, **characterised in that** the blocking device (13) comprises at least one catching element (14A, 14B) arranged such that the catching element (14A, 14B) engages in a catching tooth (15A, 15B) of the second tension drum (6) in the second position of the frame (3).

11. Device according to claim 9, **characterised in that** the blocking device comprises two catching elements (14A, 14B) arranged one beside the other, which elements are arranged such that each of the catching elements (14A, 14B) engage in a catching tooth (15A, 15B) of the second tension drum (6) in the second position of the frame (3).

12. Device according to any of claims 1 to 11, **characterised in that** the tensioning device is arranged in a housing (2).

13. Device according to claim 12, **characterised in that** the housing (2) comprises two side plates (2A, 2B) and a cover plate (2C) and a base plate (2D).

14. Overhead conductor mast comprising a device for tensioning a contact wire or a bearer cable according to any of claims 1 to 13.

15. Overhead conductor mast according to claim 14, **characterised in that** the device for tensioning a contact wire or a bearer cable is arranged inside the mast head (17A) of the overhead conductor mast (17).

## Revendications

1. Dispositif de tension d'un fil conducteur ou d'un câble porteur d'une installation de caténaires avec
un système de tension qui présente un premier tambour de tension (5) pour la réception d'un câble de haubanage relié au fil conducteur ou au câble porteur et un second tambour de tension (6) pour la réception d'un câble de poids relié à un contrepoids de tension de caténaires,
**caractérisé en ce que**
le premier tambour de tension (5) et le second tambour de tension (6) sont reliés pour la réduction du poids du contrepoids de tension de caténaires à un engrenage (9), les axes (5A, 6A) des premier et second tambours de tension étant agencés à distance l'un de l'autre.

2. Dispositif selon la revendication 1, **caractérisé en ce que** le premier tambour de tension (5) et le second tambour de tension (6) présentent le même diamètre.

3. Dispositif selon la revendication 1 ou 2, **caractérisé en ce que** l'engrenage est un engrenage de mécanisme de traction (9).

4. Dispositif selon la revendication 3, **caractérisé en ce que** l'engrenage de mécanisme de traction est un engrenage à chaîne (9) qui présente une paire (10A, 11A) de pignons qui sont enroulés par une chaîne (16A), la paire (10A, 11A) de pignons étant agencée en regard sur un côté des premier et second tambours de tension (5, 6).

5. Dispositif selon la revendication 3, **caractérisé en ce que** l'engrenage de mécanisme de traction est un engrenage à chaîne (9) qui présente deux paires (10A, 11A ; 10B, 11B) de pignons qui sont enroulés respectivement par une chaîne (16A, 16B), l'une paire (10A, 11A) de pignons étant agencée en regard sur l'un côté et l'autre paire (10B, 11B) de pignons étant agencée en regard sur l'autre côté des premier et second tambours de tension (5, 6).

6. Dispositif selon l'une quelconque des revendications 1 à 5, **caractérisé en ce que** les premier et second tambours de tension (5, 6) sont logés de manière rotative sur un cadre (3).

7. Dispositif selon la revendication 6, **caractérisé en ce que** le cadre (3) présente deux plaques (3A, 3B) en regard, entre lesquelles les premier et second tambours de tension (5, 6) sont agencés.

8. Dispositif selon la revendication 5 ou 6, **caractérisé en ce que** le cadre (3) est logé de manière pivotante autour d'un axe de pivotement (4) s'étendant parallèlement aux axes de rotation (5A, 6A) des premier et second tambours de tension (5, 6) de sorte que le cadre (3) puisse être pivoté d'une première position à une seconde position.

9. Dispositif selon l'une quelconque des revendications 1 à 8, **caractérisé en ce que** le système de tension présente un système de verrouillage (13) qui est réalisé de telle manière que dans la première position du cadre (3), le premier et/ou le second tambour de tension (5, 6) puisse être tourné librement et dans la seconde position du cadre (3), le premier et/ou le second tambour de tension (5, 6) soit bloqué.

10. Dispositif selon la revendication 9, **caractérisé en ce que** le système de verrouillage (13) présente au moins un élément d'encliquetage (14A, 14B) qui est agencé de telle manière que l'élément d'encliquetage (14A, 14B) s'engage dans la seconde position du cadre (3) dans une denture d'encliquetage (15A, 15B) du second tambour de tension (6).

11. Dispositif selon la revendication 9, **caractérisé en ce que** le système de verrouillage présente deux éléments d'encliquetage (14A, 14B) agencés l'un à côté de l'autre qui sont agencés de telle manière que les éléments d'encliquetage (14A, 14B) dans la seconde position du cadre (3) s'engagent respectivement dans une denture d'encliquetage (15A, 15B) du second tambour de tension (6).

12. Dispositif selon l'une quelconque des revendications 1 à 11, **caractérisé en ce que** le système de tension est agencé dans un boîtier (2).

13. Dispositif selon la revendication 12, **caractérisé en ce que** le boîtier (2) présente deux plaques latérales (2A, 2B) et une plaque de recouvrement (2C) et une plaque de fond (2D).

14. Mât de caténaire avec un dispositif de tension d'un fil conducteur ou d'un câble porteur selon l'une quelconque des revendications 1 à 13.

15. Mât de caténaire selon la revendication 14, **caractérisé en ce que** le dispositif de tension d'un fil conducteur ou d'un câble porteur est agencé dans la tête (17A) du mât de caténaire (17).
